# EUROPEAN PATENT APPLICATION

(11) **EP 4 825 646 A1**
(43) Date of publication of application: **21.10.2026**
(21) Application number: 25917345.8
(22) Date of filing: 26.12.2025
(51) Int. Cl.: B60L 53/63, B60L 53/57, G06Q 10/0631

(54) **MOBILE ENERGY STORAGE CHARGING SYSTEM AND CONTROL METHOD THEREFOR**

(30) Priority: 10.02.2025 CN 202510142721
(71) Applicant: Nantong Guaxuan New Energy Technology Co., Ltd, Nantong, Jiangsu 226000 (CN)
(72) Inventor: PENG, Qinggen, Nantong, Jiangsu 226000 (CN); FU, Zhongyu, Nantong, Jiangsu 226000 (CN); XU, He, Nantong, Jiangsu 226000 (CN); ZHU, Yi, Nantong, Jiangsu 226000 (CN)
(74) Representative: Lucidity IP Ltd
(86) International application number: PCT/CN2025/145866
(87) International publication number: WO 2026/166215

(57) **Abstract**

A mobile energy storage charging system and a control method thereof are provided. Historical charging records are collected after user vehicles enter a charging site and charging requests are generated through a mobile charging system. Entry time periods corresponding to the historical charging records are analyzed to determine peak time periods. Waiting-duration ratios are calculated to determine waiting levels, waiting scores of peak time periods, and feature levels. Feature time periods are screened, average operating scores are calculated, and an operating curve graph is drawn. Real-time operating scores of sampling time periods are used to draw a real-time operating curve graph, which is compared with the operating curve graph to calculate a real-time optimization period. An optimization state of the mobile charging system is determined according to the real-time optimization period, thereby supporting dynamic optimization of system operation.

## Description

### TECHNICAL FIELD

The present disclosure relates to the technical field of vehicle charging, and in particular to a mobile energy storage charging system and a control method thereof.

### BACKGROUND

In recent years, the new energy industry has developed rapidly, and the penetration rate of electric vehicles has continued to increase. As a result, demand for public charging facilities has increased significantly, and the imbalance between facility supply and demand has become increasingly apparent. Such imbalance may be reflected in, for example, uneven distribution of public charging facilities, unreasonable layout of charging facilities, difficulty in infrastructure construction, and relatively high subsequent maintenance costs.

To alleviate the foregoing issues, mobile charging systems have gradually attracted attention as an emerging technology. A mobile charging system may include a built-in lithium iron phosphate battery pack, and may provide advantages such as flexible deployment. The system may be applied in scenarios where infrastructure construction is relatively difficult and in regions having significant tidal charging-demand characteristics. A mobile charging system may be moved to an energy replenishment region for charging, and then transferred to a use region to provide charging services, thereby enabling flexible allocation of charging resources.

However, in practical applications, conventional mobile charging systems may experience fluctuations in system operating efficiency. Optimizing a mobile charging system is therefore important for improving its operating efficiency. In particular, when system operating efficiency decreases, determining an optimization demand in a reasonable manner is a key challenge for maintaining overall system performance and efficiency. If optimization is performed blindly and immediately whenever operating efficiency decreases, overall system performance may be adversely affected. Therefore, a scientific and reasonable optimization determination mechanism is needed to improve the intelligence level of a mobile charging system, thereby better improving overall operating efficiency of the system.

### SUMMARY

Certain embodiments of the present disclosure provide a mobile energy storage charging control method. The method includes the following steps.

In step S100, each time it is identified that a user vehicle enters a charging site and the user sends a charging request through a mobile charging system, the system generates one charging record. Entry time periods corresponding to historical charging records are collected, and peak time periods are determined according to quantities of historical charging records corresponding to the entry time periods.

In step S200, waiting-duration ratios of historical charging records are calculated, waiting levels of the historical charging records are determined, waiting scores of peak time periods are calculated according to quantities of historical charging records corresponding to different waiting levels in the peak time periods, and feature levels corresponding to the peak time periods are determined.

In step S300, feature time periods are screened, average operating scores of the feature time periods are calculated, and an operating curve graph of the mobile charging system is drawn.

In step S400, a real-time operating curve graph of the mobile charging system is drawn according to real-time operating scores of sampling time periods, the real-time operating curve graph is combined with the operating curve graph, a real-time optimization period of the mobile charging system is calculated, and an optimization state of the mobile charging system is determined according to the real-time optimization period.

In some embodiments, step S100 includes the following steps.

In step S101, one day is divided into a plurality of time periods, a time range corresponding to each time period is obtained, historical charging records of the mobile charging system are obtained, a time point at which a user vehicle enters the charging site in one historical charging record is collected, and an entry time period corresponding to the historical charging record is determined.

In step S102, a quantity of historical charging records corresponding to one entry time period is counted as A, a total quantity of historical charging records is obtained as B, and an occurrence frequency of the entry time period is calculated as A/B.

In step S103, an occurrence-frequency threshold is set, the occurrence frequency of one entry time period is compared with the occurrence-frequency threshold, and, if the occurrence frequency exceeds the occurrence-frequency threshold, the entry time period is set as a peak time period.

By counting occurrence frequencies of different entry time periods, peak time periods of charging demand can be accurately identified, thereby providing data support for the mobile charging system. Data analysis based on historical charging records may make a decision-making process more objective and accurate, reduce uncertainty caused by subjective judgment, and improve intelligent management of a charging station.

In some embodiments, step S200 includes the following steps.

In step S201, a duration from when the user vehicle is parked in a parking space to when charging starts is set as a waiting duration. In a set of historical charging records of one peak time period, a waiting duration of one historical charging record is obtained as C, and a charging duration is obtained as D. A waiting-duration ratio of the historical charging record is calculated as (C+D)/D.

In step S202, waiting-duration ratios of all historical charging records are summarized, the waiting-duration ratios are divided into a plurality of waiting levels, a waiting-duration-ratio range corresponding to one waiting level is obtained, and a quantity of historical charging records in one waiting level within one peak time period is counted.

In step S203, each waiting level is assigned a value, and a waiting score of a peak time period is calculated according to the following formula:
$E = \frac{{\sum }_{a = 1}^{b} {F}_{a} \times {α}_{a}}{b}$

In the formula, E represents the waiting score of the peak time period, Fa represents the quantity of historical charging records of the a-th waiting level, αₐ represents the weight of the a-th waiting level, and b represents the total quantity of waiting levels.

In step S204, waiting scores of all peak time periods are summarized, the waiting scores are divided into a plurality of feature levels, each feature level is assigned a value, a waiting-score range corresponding to one feature level is obtained, and a feature level corresponding to each peak time period is determined.

If the waiting duration is longer, the value of the waiting-duration ratio also becomes greater. Therefore, the waiting-duration ratio may be used to determine whether an abnormal condition has occurred in a historical charging record. By summarizing and grading historical records having different waiting-duration ratios, the severity of different peak time periods can be clearly identified.

In some embodiments, step S300 includes the following steps.

In step S301, a plurality of consecutive days are selected as a training period, an optimization period of the mobile charging system is obtained, a plurality of sampling time points are set within the optimization period, two adjacent sampling time points are set as a sampling time period, waiting-duration ratios of charging records within one sampling time period are summarized to obtain an average waiting-duration ratio of the sampling time period, an average-waiting-duration-ratio threshold is set, the average waiting-duration ratio of one sampling time period is compared with the average-waiting-duration-ratio threshold, and, if the average waiting-duration ratio is lower than the average-waiting-duration-ratio threshold, the sampling time period is set as a feature time period.

In step S302, within one feature time period, operating parameters of the charging system in one peak time period are obtained, and an operating score of the feature time period is calculated according to the following formula:
$Y = \frac{{\sum }_{n = 1}^{m} \left({H}_{n}\times \frac{{\sum }_{i = 1}^{r} {K}_{ni} \times {β}_{i}}{r}\right)}{m}$

In the formula, Y represents the operating score of the feature time period, Kni represents a value of the i-th operating parameter in the n-th peak time period, βᵢ represents the weight of the i-th operating parameter, r represents the total quantity of operating parameters, Hn represents the weight of the feature level corresponding to the n-th peak time period, and m represents the total quantity of peak time periods.

In step S303, operating scores corresponding to one feature time period in each optimization period are summarized to obtain an average operating score of the feature time period, and an operating curve graph of the mobile charging system is drawn. In the operating curve graph, the average operating score of the feature time period is used as the ordinate, and the feature time period is used as the abscissa.

The feature time period is determined because a threshold is set to screen out time periods in which operation is efficient, thereby reducing influence from unrelated time periods. A time period lower than the threshold indicates relatively high charging efficiency and a suitable equipment load, and is therefore marked as a feature time period, which may provide data support for subsequent optimization measures.

The operating parameters of charging equipment include equipment utilization rate, load balancing degree, charging completion rate, and the like. By calculating the operating score of the feature time period, multiple operating parameters of the charging equipment and influences of peak time periods are considered, so that overall performance of the system can be evaluated more comprehensively. Because multi-dimensional factors are considered in the score, the operating quality and load condition of the system can be reflected more objectively.

By presenting average operating scores of feature time periods in the form of a curve graph, an operating variation trend of each time period can be visually observed. Such visualization results may help an operator quickly identify system optimization effects, evaluate load capacities in different time periods, and make adjustments accordingly.

In some embodiments, step S400 includes the following steps.

In step S401, a real-time operating score in one sampling time period is obtained, a real-time operating curve graph of the mobile charging system is drawn, and the real-time operating curve graph is compared and analyzed with the operating curve graph of the mobile charging system. When the real-time operating curve is higher than the operating curve in one sampling time period, the sampling time period is marked as a high-efficiency time period. When the real-time operating curve is lower than the operating curve in one sampling time period, the sampling time period is marked as a low-efficiency time period.

In step S402, high-efficiency time periods and low-efficiency time periods are separately summarized. In one time-period set, a real-time operating score corresponding to one sampling time period in the real-time operating curve graph is collected as Y1, an operating score corresponding to the sampling time period in the operating curve graph is collected as Y2, and a change value of the sampling time period is calculated as:
$\left|Y1-Y2\right|$

In step S403, a real-time optimization period of the mobile charging system is calculated according to the following formula:
$T = t \times \frac{{\sum }_{e = 1}^{f} {L}_{e} \times {P}_{1}}{f} \times \frac{{\sum }_{h = 1}^{j} {L}_{h} \times {P}_{2}}{j}$

In the formula, T represents the real-time optimization period of the mobile charging system, t represents the optimization period of the mobile charging system, Le represents a change value of the e-th sampling time period in the high-efficiency time periods, P1 represents a weight of the high-efficiency time periods, f represents the total quantity of sampling time periods in the high-efficiency time periods, Lh represents a change value of the h-th sampling time period in the low-efficiency time periods, P2 represents a weight of the low-efficiency time periods, and j represents the total quantity of sampling time periods in the low-efficiency time periods.

In step S404, the real-time optimization period is compared with a time interval of a next sampling time period, and, if the real-time optimization period is less than the time interval, a worker is prompted to optimize the mobile charging system.

The real-time operating score reflects a current operating state of the charging system within a time period. By drawing the real-time operating curve graph, operation performance of the system can be dynamically tracked, and abnormal conditions or fluctuations can be detected in a timely manner. The operating curve represents an average operating level of the system in past optimization periods, while the real-time operating curve reflects a current system state. By comparison, the current operating condition of the system can be determined. By marking high-efficiency and low-efficiency time periods, targeted feedback can be provided for system optimization to facilitate subsequent analysis and adjustment.

The real-time optimization period may be dynamically adjusted according to performance of high-efficiency and low-efficiency time periods, and may reflect whether the system currently needs to accelerate or slow down an adjustment frequency. If the contribution of the high-efficiency time periods is greater, T increases, indicating that the optimization period may be appropriately extended and unnecessary adjustment may be reduced. If the influence of the low-efficiency time periods is greater, T decreases, indicating that adjustment may need to be performed more quickly to address low-efficiency issues. The dynamic optimization period can improve the agility of system adjustment, reduce excessive adjustment or delayed adjustment, and improve system performance.

Certain embodiments of the present disclosure further provide a mobile energy storage charging system for better implementing the foregoing method. The system includes a peak time period module, a feature level module, an operating curve graph module, and a real-time determination module.

The peak time period module is configured such that, each time it is identified that a user vehicle enters a charging site and the user sends a charging request through the mobile charging system, the system generates one charging record. The peak time period module collects entry time periods corresponding to historical charging records, and determines peak time periods according to quantities of historical charging records corresponding to the entry time periods.

The feature level module is configured to calculate waiting-duration ratios of historical charging records, determine waiting levels of the historical charging records, calculate waiting scores of the peak time periods according to quantities of historical charging records corresponding to different waiting levels in the peak time periods, and determine feature levels corresponding to the peak time periods.

The operating curve graph module is configured to screen feature time periods, calculate average operating scores of the feature time periods, and draw an operating curve graph of the mobile charging system.

The real-time determination module is configured to draw a real-time operating curve graph of the mobile charging system according to real-time operating scores of sampling time periods, combine the real-time operating curve graph with the operating curve graph, calculate a real-time optimization period of the mobile charging system, and determine an optimization state of the mobile charging system according to the real-time optimization period.

In some embodiments, the peak time period module includes an occurrence frequency calculation unit and a peak time period determination unit.

The occurrence frequency calculation unit is configured to divide one day into a plurality of time periods, obtain a time range corresponding to each time period, obtain historical charging records of the mobile charging system, collect a time point at which a user vehicle enters a charging site in one historical charging record, determine an entry time period corresponding to the historical charging record, count a quantity of historical charging records corresponding to one entry time period, obtain a total quantity of historical charging records, and calculate an occurrence frequency of the entry time period.

The peak time period determination unit is configured to set an occurrence-frequency threshold, compare the occurrence frequency of one entry time period with the occurrence-frequency threshold, and, if the occurrence frequency exceeds the occurrence-frequency threshold, set the entry time period as a peak time period.

In some embodiments, the feature level module includes a waiting level unit and a feature level determination unit.

The waiting level unit is configured to set, as a waiting duration, a duration from when a user vehicle is parked in a parking space to when charging starts; obtain a waiting duration and a charging duration of one historical charging record in a set of historical charging records of one peak time period; calculate a waiting-duration ratio of the historical charging record; summarize waiting-duration ratios of all historical charging records; divide the waiting-duration ratios into a plurality of waiting levels; and obtain a waiting-duration-ratio range corresponding to one waiting level.

The feature level determination unit is configured to assign a value to each waiting level, calculate a waiting score of a peak time period, summarize waiting scores of all peak time periods, divide the waiting scores into a plurality of feature levels, assign a value to each feature level, obtain a waiting-score range corresponding to one feature level, and determine a feature level corresponding to each peak time period.

In some embodiments, the operating curve graph module includes a feature time period determination unit and an operating curve graph drawing unit.

The feature time period determination unit is configured to select a plurality of consecutive days as a training period, obtain an optimization period of the mobile charging system, set a plurality of sampling time points within the optimization period, set two adjacent sampling time points as a sampling time period, summarize waiting-duration ratios of charging records within one sampling time period to obtain an average waiting-duration ratio of the sampling time period, set an average-waiting-duration-ratio threshold, compare the average waiting-duration ratio of one sampling time period with the average-waiting-duration-ratio threshold, and, if the average waiting-duration ratio is lower than the average-waiting-duration-ratio threshold, set the sampling time period as a feature time period.

The operating curve graph drawing unit is configured to obtain operating parameters of charging equipment in one peak time period within one feature time period, calculate an operating score of the feature time period, summarize operating scores corresponding to one feature time period in each optimization period to obtain an average operating score of the feature time period, and draw an operating curve graph of the mobile charging system, where the operating curve graph uses the average operating score of the feature time period as an ordinate and the feature time period as an abscissa.

In some embodiments, the real-time determination module includes a real-time operating curve graph drawing unit and an optimization determination unit.

The real-time operating curve graph drawing unit is configured to obtain a real-time operating score in one sampling time period, draw a real-time operating curve graph of the mobile charging system, and compare and analyze the real-time operating curve graph with the operating curve graph of the mobile charging system. When the real-time operating curve is higher than the operating curve in one sampling time period, the sampling time period is marked as a high-efficiency time period. When the real-time operating curve is lower than the operating curve in one sampling time period, the sampling time period is marked as a low-efficiency time period.

The optimization determination unit is configured to separately summarize high-efficiency time periods and low-efficiency time periods; in one time-period set, collect a real-time operating score corresponding to one sampling time period in the real-time operating curve graph; collect an operating score corresponding to the sampling time period in the operating curve graph; calculate a change value of the sampling time period; calculate a real-time optimization period of the mobile charging system; compare the real-time optimization period with a time interval of a next sampling time period; and, if the real-time optimization period is less than the time interval, prompt a worker to optimize the mobile charging system.

### BRIEF DESCRIPTION OF THE DRAWINGS

FIG. 1 is a schematic flowchart of a mobile energy storage charging control method according to an embodiment of the present disclosure.
FIG. 2 is a schematic structural diagram of a mobile energy storage charging system according to an embodiment of the present disclosure.

### DETAILED DESCRIPTION OF THE EMBODIMENTS

The technical solutions in embodiments of the present disclosure are described clearly and completely below with reference to the accompanying drawings in the embodiments of the present disclosure. The described embodiments are merely some, rather than all, embodiments of the present disclosure. Other embodiments obtained by a person of ordinary skill in the art based on the embodiments of the present disclosure without creative effort are intended to fall within the scope of the present disclosure.

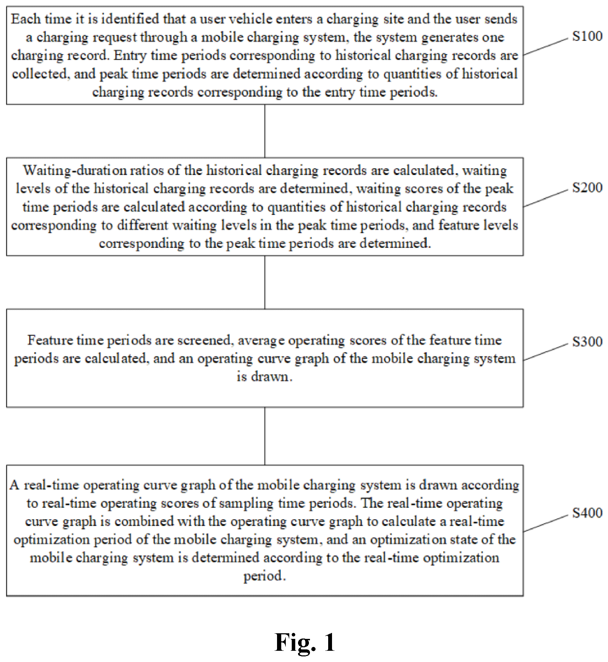

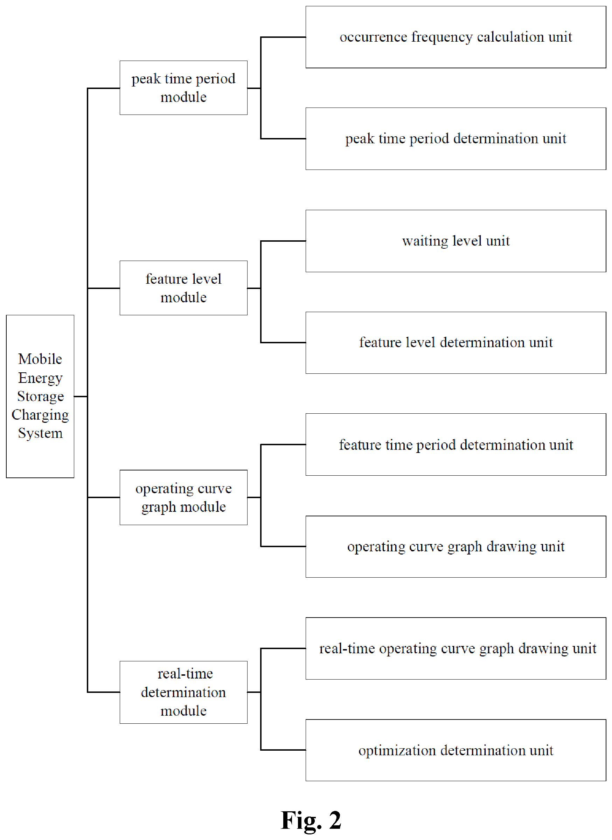

Referring to FIG. 1 and FIG. 2, embodiments of the present disclosure provide a mobile energy storage charging control method. The method includes the following steps.

In step S100, each time it is identified that a user vehicle enters a charging site and the user sends a charging request through a mobile charging system, the system generates one charging record. Entry time periods corresponding to historical charging records are collected, and peak time periods are determined according to quantities of historical charging records corresponding to the entry time periods.

Step S100 includes the following steps.

In step S101, one day is divided into a plurality of time periods, a time range corresponding to each time period is obtained, historical charging records of the mobile charging system are obtained, a time point at which a user vehicle enters the charging site in one historical charging record is collected, and an entry time period corresponding to the historical charging record is determined.

In step S102, a quantity of historical charging records corresponding to one entry time period is counted as A, a total quantity of historical charging records is obtained as B, and an occurrence frequency of the entry time period is calculated as A/B.

In step S103, an occurrence-frequency threshold is set, the occurrence frequency of one entry time period is compared with the occurrence-frequency threshold, and, if the occurrence frequency exceeds the occurrence-frequency threshold, the entry time period is set as a peak time period.

In step S200, waiting-duration ratios of historical charging records are calculated, waiting levels of the historical charging records are determined, waiting scores of peak time periods are calculated according to quantities of historical charging records corresponding to different waiting levels in the peak time periods, and feature levels corresponding to the peak time periods are determined.

Step S200 includes the following steps.

In step S201, a duration from when the user vehicle is parked in a parking space to when charging starts is set as a waiting duration. In a set of historical charging records of one peak time period, a waiting duration of one historical charging record is obtained as C, and a charging duration is obtained as D. A waiting-duration ratio of the historical charging record is calculated as (C+D)/D.

In step S202, waiting-duration ratios of all historical charging records are summarized, the waiting-duration ratios are divided into a plurality of waiting levels, a waiting-duration-ratio range corresponding to one waiting level is obtained, and a quantity of historical charging records in one waiting level within one peak time period is counted.

In step S203, each waiting level is assigned a value, and a waiting score of a peak time period is calculated according to the following formula:
$E = \frac{{\sum }_{a = 1}^{b} {F}_{a} \times {α}_{a}}{b}$

In the formula, E represents the waiting score of the peak time period, Fa represents the quantity of historical charging records of the a-th waiting level, αₐ represents the weight of the a-th waiting level, and b represents the total quantity of waiting levels.

In step S204, waiting scores of all peak time periods are summarized, the waiting scores are divided into a plurality of feature levels, each feature level is assigned a value, a waiting-score range corresponding to one feature level is obtained, and a feature level corresponding to each peak time period is determined.

For example, in an A-th peak time period, a quantity of historical charging records in an a-th waiting level is 2, a quantity of historical charging records in a b-th waiting level is 1, and a quantity of historical charging records in a c-th waiting level is 3. A waiting score of the A-th peak time period is calculated as 10.

In step S300, feature time periods are screened, average operating scores of the feature time periods are calculated, and an operating curve graph of the mobile charging system is drawn.

Step S300 includes the following steps.

In step S301, a plurality of consecutive days are selected as a training period, an optimization period of the mobile charging system is obtained, a plurality of sampling time points are set within the optimization period, two adjacent sampling time points are set as a sampling time period, waiting-duration ratios of charging records within one sampling time period are summarized to obtain an average waiting-duration ratio of the sampling time period, an average-waiting-duration-ratio threshold is set, the average waiting-duration ratio of one sampling time period is compared with the average-waiting-duration-ratio threshold, and, if the average waiting-duration ratio is lower than the average-waiting-duration-ratio threshold, the sampling time period is set as a feature time period.

In step S302, within one feature time period, operating parameters of the charging system in one peak time period are obtained, and an operating score of the feature time period is calculated according to the following formula:
$Y = \frac{{\sum }_{n = 1}^{m} \left({H}_{n}\times \frac{{\sum }_{i = 1}^{r} {K}_{ni} \times {β}_{i}}{r}\right)}{m}$

In the formula, Y represents the operating score of the feature time period, Kni represents a value of the i-th operating parameter in the n-th peak time period, βᵢ represents the weight of the i-th operating parameter, r represents the total quantity of operating parameters, Hn represents the weight of the feature level corresponding to the n-th peak time period, and m represents the total quantity of peak time periods.

In step S303, operating scores corresponding to one feature time period in each optimization period are summarized to obtain an average operating score of the feature time period, and an operating curve graph of the mobile charging system is drawn. In the operating curve graph, the average operating score of the feature time period is used as the ordinate, and the feature time period is used as the abscissa.

For example, in a first feature time period, an A-th peak time period and a B-th peak time period exist. In the A-th peak time period, a first operating parameter is 85%, a second operating parameter is 75%, and a third operating parameter is 90%. In the B-th peak time period, a first operating parameter is 80%, a second operating parameter is 70%, and a third operating parameter is 85%. An operating score of the first feature time period is calculated as 16.6.

In step S400, a real-time operating curve graph of the mobile charging system is drawn according to real-time operating scores of sampling time periods, the real-time operating curve graph is combined with the operating curve graph, a real-time optimization period of the mobile charging system is calculated, and an optimization state of the mobile charging system is determined according to the real-time optimization period.

Step S400 includes the following steps.

In step S401, a real-time operating score in one sampling time period is obtained, a real-time operating curve graph of the mobile charging system is drawn, and the real-time operating curve graph is compared and analyzed with the operating curve graph of the mobile charging system. When the real-time operating curve is higher than the operating curve in one sampling time period, the sampling time period is marked as a high-efficiency time period. When the real-time operating curve is lower than the operating curve in one sampling time period, the sampling time period is marked as a low-efficiency time period.

In step S402, high-efficiency time periods and low-efficiency time periods are separately summarized. In one time-period set, a real-time operating score corresponding to one sampling time period in the real-time operating curve graph is collected as Y1, an operating score corresponding to the sampling time period in the operating curve graph is collected as Y2, and a change value of the sampling time period is calculated as: |*Y*1 -*Y*2|

In step S403, a real-time optimization period of the mobile charging system is calculated according to the following formula:
$T = t \times \frac{{\sum }_{e = 1}^{f} {L}_{e} \times {P}_{1}}{f} \times \frac{{\sum }_{h = 1}^{j} {L}_{h} \times {P}_{2}}{j}$

In the formula, T represents the real-time optimization period of the mobile charging system, t represents the optimization period of the mobile charging system, Le represents a change value of the e-th sampling time period in the high-efficiency time periods, P1 represents a weight of the high-efficiency time periods, f represents the total quantity of sampling time periods in the high-efficiency time periods, Lh represents a change value of the h-th sampling time period in the low-efficiency time periods, P2 represents a weight of the low-efficiency time periods, and j represents the total quantity of sampling time periods in the low-efficiency time periods.

In step S404, the real-time optimization period is compared with a time interval of a next sampling time period, and, if the real-time optimization period is less than the time interval, a worker is prompted to optimize the mobile charging system.

Embodiments of the present disclosure further provide a mobile energy storage charging system for implementing the foregoing method. The system includes a peak time period module, a feature level module, an operating curve graph module, and a real-time determination module.

The peak time period module is configured such that, each time it is identified that a user vehicle enters a charging site and the user sends a charging request through the mobile charging system, the system generates one charging record. The peak time period module collects entry time periods corresponding to historical charging records, and determines peak time periods according to quantities of historical charging records corresponding to the entry time periods.

The peak time period module includes an occurrence frequency calculation unit and a peak time period determination unit.

The occurrence frequency calculation unit is configured to divide one day into a plurality of time periods, obtain a time range corresponding to each time period, obtain historical charging records of the mobile charging system, collect a time point at which a user vehicle enters a charging site in one historical charging record, determine an entry time period corresponding to the historical charging record, count a quantity of historical charging records corresponding to one entry time period, obtain a total quantity of historical charging records, and calculate an occurrence frequency of the entry time period.

The peak time period determination unit is configured to set an occurrence-frequency threshold, compare the occurrence frequency of one entry time period with the occurrence-frequency threshold, and, if the occurrence frequency exceeds the occurrence-frequency threshold, set the entry time period as a peak time period.

The feature level module is configured to calculate waiting-duration ratios of historical charging records, determine waiting levels of the historical charging records, calculate waiting scores of the peak time periods according to quantities of historical charging records corresponding to different waiting levels in the peak time periods, and determine feature levels corresponding to the peak time periods.

The feature level module includes a waiting level unit and a feature level determination unit.

The waiting level unit is configured to set, as a waiting duration, a duration from when a user vehicle is parked in a parking space to when charging starts; obtain a waiting duration and a charging duration of one historical charging record in a set of historical charging records of one peak time period; calculate a waiting-duration ratio of the historical charging record; summarize waiting-duration ratios of all historical charging records; divide the waiting-duration ratios into a plurality of waiting levels; and obtain a waiting-duration-ratio range corresponding to one waiting level.

The feature level determination unit is configured to assign a value to each waiting level, calculate a waiting score of a peak time period, summarize waiting scores of all peak time periods, divide the waiting scores into a plurality of feature levels, assign a value to each feature level, obtain a waiting-score range corresponding to one feature level, and determine a feature level corresponding to each peak time period.

The operating curve graph module is configured to screen feature time periods, calculate average operating scores of the feature time periods, and draw an operating curve graph of the mobile charging system.

The operating curve graph module includes a feature time period determination unit and an operating curve graph drawing unit.

The feature time period determination unit is configured to select a plurality of consecutive days as a training period, obtain an optimization period of the mobile charging system, set a plurality of sampling time points within the optimization period, set two adjacent sampling time points as a sampling time period, summarize waiting-duration ratios of charging records within one sampling time period to obtain an average waiting-duration ratio of the sampling time period, set an average-waiting-duration-ratio threshold, compare the average waiting-duration ratio of one sampling time period with the average-waiting-duration-ratio threshold, and, if the average waiting-duration ratio is lower than the average-waiting-duration-ratio threshold, set the sampling time period as a feature time period.

The operating curve graph drawing unit is configured to obtain operating parameters of charging equipment in one peak time period within one feature time period, calculate an operating score of the feature time period, summarize operating scores corresponding to one feature time period in each optimization period to obtain an average operating score of the feature time period, and draw an operating curve graph of the mobile charging system, where the operating curve graph uses the average operating score of the feature time period as an ordinate and the feature time period as an abscissa.

The real-time determination module is configured to draw a real-time operating curve graph of the mobile charging system according to real-time operating scores of sampling time periods, combine the real-time operating curve graph with the operating curve graph, calculate a real-time optimization period of the mobile charging system, and determine an optimization state of the mobile charging system according to the real-time optimization period.

The real-time determination module includes a real-time operating curve graph drawing unit and an optimization determination unit.

The real-time operating curve graph drawing unit is configured to obtain a real-time operating score in one sampling time period, draw a real-time operating curve graph of the mobile charging system, and compare and analyze the real-time operating curve graph with the operating curve graph of the mobile charging system. When the real-time operating curve is higher than the operating curve in one sampling time period, the sampling time period is marked as a high-efficiency time period. When the real-time operating curve is lower than the operating curve in one sampling time period, the sampling time period is marked as a low-efficiency time period.

The optimization determination unit is configured to separately summarize high-efficiency time periods and low-efficiency time periods; in one time-period set, collect a real-time operating score corresponding to one sampling time period in the real-time operating curve graph; collect an operating score corresponding to the sampling time period in the operating curve graph; calculate a change value of the sampling time period; calculate a real-time optimization period of the mobile charging system; compare the real-time optimization period with a time interval of a next sampling time period; and, if the real-time optimization period is less than the time interval, prompt a worker to optimize the mobile charging system.

Compared with some existing technologies, embodiments of the present disclosure may provide one or more of the following beneficial effects.

By dynamically drawing a real-time operating curve and comparing the real-time operating curve with a historical operating curve, an operating state of the system can be identified and optimized in real time.

By monitoring an operating score of each sampling time period in real time, high-efficiency and low-efficiency time periods can be identified and marked in real time, thereby providing targeted data support for dynamic optimization.

By calculating the real-time optimization period and adjusting the system operating state according to a change value of the real-time optimization period, the charging system can respond to demand fluctuations in a timely manner, reducing excessive load or inefficient operation of the charging system. Such dynamic optimization can improve efficiency of the charging system, reduce resource waste, improve response speed of charging services, help maintain efficient operation of the charging system, and reduce unnecessary energy waste.

The present disclosure is not limited to the details of the exemplary embodiments described above, and may be implemented in other specific forms without departing from the spirit or basic characteristics of the present disclosure. Therefore, the embodiments should be regarded as illustrative and non-limiting. The scope of the present disclosure is defined by the claims rather than by the foregoing description. All changes falling within the meaning and range of equivalents of the claims are intended to be included in the present disclosure. Any reference signs in the claims should not be construed as limiting the claims involved.

## Claims

1. A mobile energy storage charging control method, comprising:
step S100: when it is identified that a user vehicle enters a charging site and a user sends a charging request through a mobile charging system, generating, by the mobile charging system, a charging record; collecting entry time periods corresponding to historical charging records; and determining peak time periods according to quantities of historical charging records corresponding to the entry time periods;
step S200: calculating waiting-duration ratios of the historical charging records; determining waiting levels of the historical charging records; calculating waiting scores of the peak time periods according to quantities of historical charging records corresponding to different waiting levels in the peak time periods; and determining feature levels corresponding to the peak time periods;
step S300: screening feature time periods; calculating average operating scores of the feature time periods; and drawing an operating curve graph of the mobile charging system; and
step S400: drawing a real-time operating curve graph of the mobile charging system according to real-time operating scores of sampling time periods; combining the real-time operating curve graph with the operating curve graph; calculating a real-time optimization period of the mobile charging system; and determining an optimization state of the mobile charging system according to the real-time optimization period.

2. The mobile energy storage charging control method of claim 1, wherein step S100 comprises:
step S101: dividing one day into a plurality of time periods, obtaining a time range corresponding to each time period, obtaining the historical charging records of the mobile charging system, collecting a time point at which the user vehicle enters the charging site in one historical charging record, and determining an entry time period corresponding to the historical charging record;
step S102: counting a quantity of historical charging records corresponding to one entry time period as A, obtaining a total quantity of the historical charging records as B, and calculating an occurrence frequency of the entry time period as A/B; and
step S103: setting an occurrence-frequency threshold, comparing the occurrence frequency of one entry time period with the occurrence-frequency threshold, and, when the occurrence frequency exceeds the occurrence-frequency threshold, setting the entry time period as one of the peak time periods.

3. The mobile energy storage charging control method of claim 2, wherein step S200 comprises:
step S201: setting, as a waiting duration, a duration from when the user vehicle is parked in a parking space to when charging starts, obtaining, in a set of historical charging records of one peak time period, a waiting duration of one historical charging record as C and a charging duration of the one historical charging record as D, and calculating a waiting-duration ratio of the one historical charging record as (C+D)/D;
step S202: summarizing waiting-duration ratios of all historical charging records, dividing the waiting-duration ratios into a plurality of waiting levels, obtaining a waiting-duration-ratio range corresponding to one waiting level, and counting a quantity of historical charging records in one waiting level within one peak time period;
step S203: assigning a value to each waiting level, and calculating a waiting score of a peak time period according to a formula; $E = \frac{{\sum }_{a = 1}^{b} {F}_{a} \times {α}_{a}}{b}$
wherein E represents the waiting score of the peak time period, Fa represents the quantity of historical charging records of an a-th waiting level, αₐ represents a weight of the a-th waiting level, and b represents a total quantity of waiting levels; and
step S204: summarizing waiting scores of all peak time periods, dividing the waiting scores into a plurality of feature levels, assigning a value to each feature level, obtaining a waiting-score range corresponding to one feature level, and determining a feature level corresponding to each peak time period.

4. The mobile energy storage charging control method of claim 3, wherein step S300 comprises:
step S301: selecting a plurality of consecutive days as a training period, obtaining an optimization period of the mobile charging system, setting a plurality of sampling time points within the optimization period, setting two adjacent sampling time points as a sampling time period, summarizing waiting-duration ratios of charging records within one sampling time period to obtain an average waiting-duration ratio of the sampling time period, setting an average-waiting-duration-ratio threshold, comparing the average waiting-duration ratio of one sampling time period with the average-waiting-duration-ratio threshold, and, when the average waiting-duration ratio is lower than the average-waiting-duration-ratio threshold, setting the sampling time period as one of the feature time periods;
step S302: within one feature time period, obtaining operating parameters of a charging system in one peak time period, and calculating an operating score of the feature time period according to a formula; $Y = \frac{{\sum }_{n = 1}^{m} \left({H}_{n}\times \frac{{\sum }_{i = 1}^{r} {K}_{ni} \times {β}_{i}}{r}\right)}{m}$
wherein Y represents the operating score of the feature time period, Kni represents a value of an i-th operating parameter in an n-th peak time period, βᵢ represents a weight of the i-th operating parameter, r represents a total quantity of operating parameters, Hn represents a weight of the feature level corresponding to the n-th peak time period, and m represents a total quantity of peak time periods; and
step S303: summarizing operating scores corresponding to one feature time period in each optimization period to obtain an average operating score of the feature time period, and drawing the operating curve graph of the mobile charging system, wherein the operating curve graph uses the average operating score of the feature time period as an ordinate and the feature time period as an abscissa.

5. The mobile energy storage charging control method of claim 4, wherein step S400 comprises:
step S401: obtaining a real-time operating score in one sampling time period, drawing the real-time operating curve graph of the mobile charging system, and comparing and analyzing the real-time operating curve graph with the operating curve graph of the mobile charging system, wherein, when a real-time operating curve is higher than an operating curve in one sampling time period, the sampling time period is marked as a high-efficiency time period, and, when the real-time operating curve is lower than the operating curve in one sampling time period, the sampling time period is marked as a low-efficiency time period;
step S402: separately summarizing high-efficiency time periods and low-efficiency time periods, collecting, in one time-period set, a real-time operating score corresponding to one sampling time period in the real-time operating curve graph as Y1, collecting an operating score corresponding to the sampling time period in the operating curve graph as Y2, and calculating a change value of the sampling time period according to a formula |*Y*1 - *Y*2|;
step S403: calculating the real-time optimization period of the mobile charging system according to a formula; $T = t \times \frac{{\sum }_{e = 1}^{f} {L}_{e} \times {P}_{1}}{f} \times \frac{{\sum }_{h = 1}^{j} {L}_{h} \times {P}_{2}}{j}$
wherein T represents the real-time optimization period of the mobile charging system, t represents the optimization period of the mobile charging system, Le represents a change value of an e-th sampling time period in the high-efficiency time periods, P1 represents a weight of the high-efficiency time periods, f represents a total quantity of sampling time periods in the high-efficiency time periods, Lh represents a change value of an h-th sampling time period in the low-efficiency time periods, P2 represents a weight of the low-efficiency time periods, and j represents a total quantity of sampling time periods in the low-efficiency time periods; and
step S404: comparing the real-time optimization period with a time interval of a next sampling time period, and, when the real-time optimization period is less than the time interval, prompting a worker to optimize the mobile charging system.

6. A mobile energy storage charging system for implementing the mobile energy storage charging control method of claim 1, comprising:
a peak time period module configured to, when it is identified that a user vehicle enters a charging site and a user sends a charging request through a mobile charging system, cause the mobile charging system to generate a charging record, collect entry time periods corresponding to historical charging records, and determine peak time periods according to quantities of historical charging records corresponding to the entry time periods;
a feature level module configured to calculate waiting-duration ratios of the historical charging records, determine waiting levels of the historical charging records, calculate waiting scores of the peak time periods according to quantities of historical charging records corresponding to different waiting levels in the peak time periods, and determine feature levels corresponding to the peak time periods;
an operating curve graph module configured to screen feature time periods, calculate average operating scores of the feature time periods, and draw an operating curve graph of the mobile charging system; and
a real-time determination module configured to draw a real-time operating curve graph of the mobile charging system according to real-time operating scores of sampling time periods, combine the real-time operating curve graph with the operating curve graph, calculate a real-time optimization period of the mobile charging system, and determine an optimization state of the mobile charging system according to the real-time optimization period.

7. The mobile energy storage charging system of claim 6, wherein the peak time period module comprises an occurrence frequency calculation unit and a peak time period determination unit;
wherein the occurrence frequency calculation unit is configured to divide one day into a plurality of time periods, obtain a time range corresponding to each time period, obtain the historical charging records of the mobile charging system, collect a time point at which the user vehicle enters the charging site in one historical charging record, determine an entry time period corresponding to the historical charging record, count a quantity of historical charging records corresponding to one entry time period, obtain a total quantity of the historical charging records, and calculate an occurrence frequency of the entry time period; and
wherein the peak time period determination unit is configured to set an occurrence-frequency threshold, compare the occurrence frequency of one entry time period with the occurrence-frequency threshold, and, when the occurrence frequency exceeds the occurrence-frequency threshold, set the entry time period as one of the peak time periods.

8. The mobile energy storage charging system of claim 6, wherein the feature level module comprises a waiting level unit and a feature level determination unit;
wherein the waiting level unit is configured to set, as a waiting duration, a duration from when the user vehicle is parked in a parking space to when charging starts; obtain, in a set of historical charging records of one peak time period, a waiting duration and a charging duration of one historical charging record; calculate a waiting-duration ratio of the historical charging record; summarize waiting-duration ratios of all historical charging records; divide the waiting-duration ratios into a plurality of waiting levels; and obtain a waiting-duration-ratio range corresponding to one waiting level; and
wherein the feature level determination unit is configured to assign a value to each waiting level, calculate a waiting score of a peak time period, summarize waiting scores of all peak time periods, divide the waiting scores into a plurality of feature levels, assign a value to each feature level, obtain a waiting-score range corresponding to one feature level, and determine a feature level corresponding to each peak time period.

9. The mobile energy storage charging system of claim 6, wherein the operating curve graph module comprises a feature time period determination unit and an operating curve graph drawing unit;
wherein the feature time period determination unit is configured to select a plurality of consecutive days as a training period, obtain an optimization period of the mobile charging system, set a plurality of sampling time points within the optimization period, set two adjacent sampling time points as a sampling time period, summarize waiting-duration ratios of charging records within one sampling time period to obtain an average waiting-duration ratio of the sampling time period, set an average-waiting-duration-ratio threshold, compare the average waiting-duration ratio of one sampling time period with the average-waiting-duration-ratio threshold, and, when the average waiting-duration ratio is lower than the average-waiting-duration-ratio threshold, set the sampling time period as one of the feature time periods; and
wherein the operating curve graph drawing unit is configured to obtain operating parameters of charging equipment in one peak time period within one feature time period, calculate an operating score of the feature time period, summarize operating scores corresponding to one feature time period in each optimization period to obtain an average operating score of the feature time period, and draw the operating curve graph of the mobile charging system, wherein the operating curve graph uses the average operating score of the feature time period as an ordinate and the feature time period as an abscissa.

10. The mobile energy storage charging system of claim 6, wherein the real-time determination module comprises a real-time operating curve graph drawing unit and an optimization determination unit;
wherein the real-time operating curve graph drawing unit is configured to obtain a real-time operating score in one sampling time period, draw the real-time operating curve graph of the mobile charging system, and compare and analyze the real-time operating curve graph with the operating curve graph of the mobile charging system, wherein, when a real-time operating curve is higher than an operating curve in one sampling time period, the sampling time period is marked as a high-efficiency time period, and, when the real-time operating curve is lower than the operating curve in one sampling time period, the sampling time period is marked as a low-efficiency time period; and
wherein the optimization determination unit is configured to separately summarize high-efficiency time periods and low-efficiency time periods; collect, in one time-period set, a real-time operating score corresponding to one sampling time period in the real-time operating curve graph; collect an operating score corresponding to the sampling time period in the operating curve graph; calculate a change value of the sampling time period; calculate the real-time optimization period of the mobile charging system; compare the real-time optimization period with a time interval of a next sampling time period; and, when the real-time optimization period is less than the time interval, prompt a worker to optimize the mobile charging system.
